# EUROPEAN PATENT APPLICATION

(11) **EP 1 465 197 A1**
(43) Date of publication of application: **06.10.2004**
(21) Application number: 03290803.0
(22) Date of filing: 31.03.2003
(51) Int. Cl.: G11B 27/34

(54) **Video recorder and process for programming a new recording on a medium**

(71) Applicant: Thomson Licensing S.A., 92100 Boulogne-Billancourt (FR)
(72) Inventor: Kwok, Kwong Heng, 730375 Singapore (SG); Yu, Lee Cheng, 653289 Singapore (SG)
(74) Representative: Bonnans, Arnaud

(57) **Abstract**

In a video recorder, a process for programming a new recording on a medium has the following steps :
- displaying a first bar (34) representing the location of the new recording on the medium ;
- displaying a second bar (32) representing where an existing recording is located on the medium ;
- displaying metadata (26) associated with the existing recording when an overlapping is detected ;
- moving the first element (34) depending on user control, thereby changing the location of the new recording.

## Description

The invention relates to a video recorder and to a process for programming a new recording on a medium.

A video recorder has the ability to record video data, for instance a digital video stream, on a medium. A possible way to arrange the video data on the medium is to group the data of every video sequence together in one block. This makes the system simpler.

However, once some video sequences (or titles or recordings) have been deleted, the free space thus-generated may not fit for the recordings to be made afterwards. These kinds of system must therefore allow the user to overwrite existing titles.

To prevent undesired overwriting of titles, it has already been proposed to forbid overwriting on the medium (for instance a whole disc). This solution is however not flexible as the advantages of overwriting (retrieval of recording space) are lost for the whole medium.

The invention seeks to solve this problem by a flexible solution to make over-writings easy but secure.

The invention proposes a process for programming a new recording on a medium, comprising the steps of:
- displaying a first element representing a location of the new recording on the medium ;
- moving the first element depending on user control, thereby changing the location of the new recording.

Preferably, when the medium carries at least an existing recording, the process comprises the step of displaying a second element representing where the existing recording is located on the medium.

Advantageously, it is also checked for an overlapping between the new recording and the existing recording.

Metadata associated with the existing recording can be displayed when the overlapping is detected. This gives the user further information on the existing recording which may be overwritten to avoid any mishandling. Conveniently, the metadata is title data.

According to a possible embodiment, the method comprises the step of reading on the medium data identifying the medium, for instance a disc number. Alternatively, the method comprises the step of allowing user selection of data identifying the medium, for instance a disc number in a disc library. This notably allows storing said identifying data to use it at the time of recording.

The invention therefore proposes a video recorder comprising a medium interface for recording video data on a medium, recording location display means for displaying a first element representing a location of a new recording on the medium, and a user interface for receiving control signals, wherein the recording location display means are operatively coupled to the user interface for changing the location of the new recording based on the control signals.

Differently said, the invention proposes a process for programming a new recording on a medium, comprising the steps of:
- generating a video signal comprising a first element representing a location of the new recording on the medium;
- receiving a control signal from a user interface;
- generating a modified video signal depending on the control signal, wherein the first element represents a modified location of the new recording on the medium.

A possible embodiment of the invention will now be described with reference to:
- Figure 1 representing the main elements of a video recorder;
- Figure 2 showing a timer programming screen at a first moment;
- Figure 3 showing the timer programming screen of Figure 2 at a second moment.

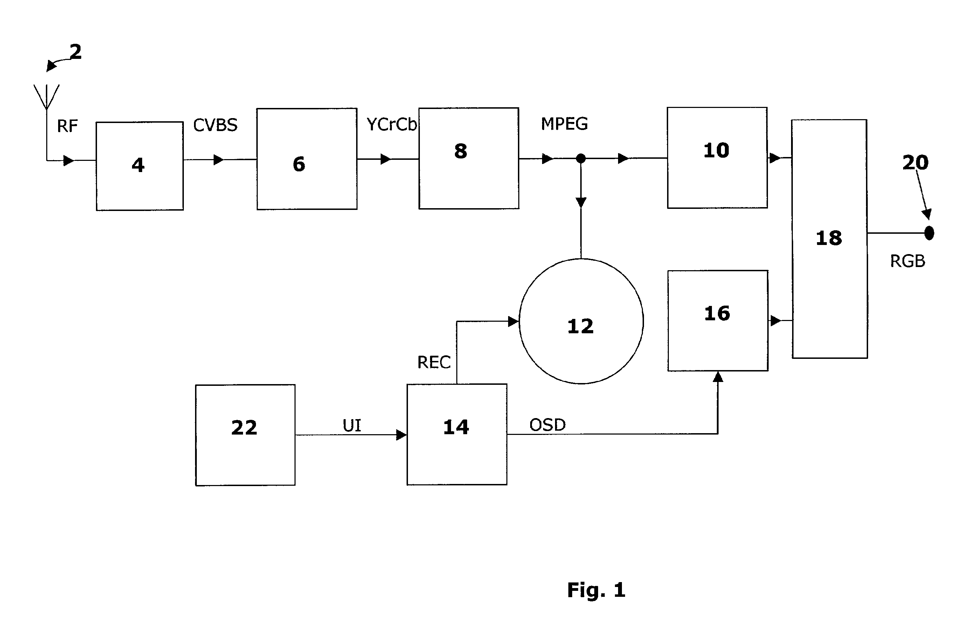

The video recorder represented at Figure 1 is a digital video recorder for recording an analogue signal received on an antenna 2.

The video recorder has a tuner-and-demodulator front-end 4 which receives the RF signal from the antenna 2 and outputs an analogue video signal CVBS. The video signal corresponds to the channel selected by the user thanks to the tuner of the front-end 4.

The analogue video signal CVBS is digitised into a YCrCb stream in a video decoder 6 and compressed into a MPEG stream by an MPEG encoder 8. The MPEG stream is transmitted to a medium interface 12 where it may be recorded on a medium (for instance an optical disc such as a DVD+R/W) depending a record control signal REC received from a micro-processor 14.

The MPEG stream is also transmitted to a MPEG decoder 10 generating corresponding RGB signals. The video sequence can thus be output as RGB signals (trough a mixer 18 as explained later) on a connector 20 so that it can be viewed on a display (not represented) connected to this connector 20.

The video recorder also has an OSD processor 16 allowing to generate text and graphic signals to be superimposed on the video sequence from the MPEG decoder 10 by the mixer 18. The mixer 18 can be controlled by the micro-processor 14 (not represented) to output on the connector 20 for display :
- only the video sequence from MPEG decoder 10;
- only the OSD picture from OSD processor 16 (for instance in a menu mode) ;
- a mix of both *(i.e.* OSD picture superimposed on video sequence).

The video recorder is controlled by its user thanks to a user interface 22 (for instance a remote-control receiver) transmitting user input signals UI to the micro-processor 14 depending for instance on keys pressed by the user on its remote-control.

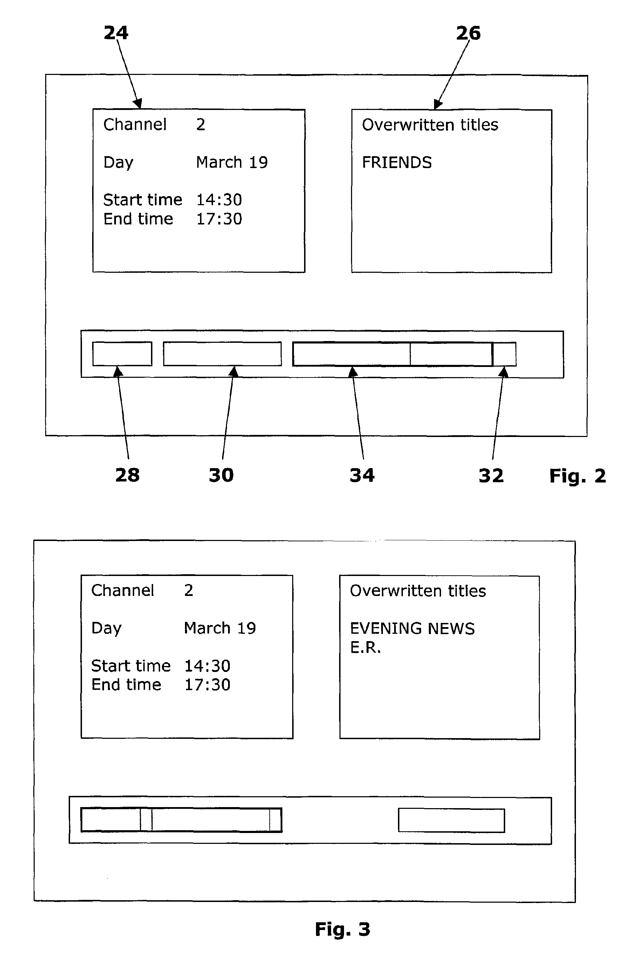

To program in advance the recording of a video sequence (new recording), the user gets through menus to a timer programming screen as depicted on Figure 2.

At the time the screen of Figure 2 is displayed by micro-processor 14 (through OSD processor 16), the user has already entered the channel he desires to record, the date on which the recording should start and the start and stop times of the recording in a timer window 24.

The micro-processor 14 can therefore compute the time-length of the new recording (3 hours in the example of Figure 2) and consequently the space needed by the new recording to be recorded on the medium. Other parameters than the time-length can be used to compute the space needed on the medium, such as for instance the quality of recording (bit rate selected by the user).

The micro-processor 14 instructs the OSD processor 16 to generate bars 28, 30, 32 representing the titles or recordings which are already existing on the medium. The recordings are physically recorded as blocks on the medium and each bar 28, 30 ,32 represents the location of the corresponding recording on the medium. The various recordings may be located next to one another (as for the recording represented by bar 28 and the recording represented by bar 30) ; two recordings may also be separated by an empty space, for instance if a previously existing recording has been deleted in-between (as for the recording represented by bar 30 and the recording represented by bar 32).

The micro-processor 14 also instructs the OSD processor 16 to generate a further bar 34 (here in bold lines, and thus called bold bar in the following) representing where the new recording could be made *(i.e.* written) on the medium. The length of the bold bar 34 represents the space needed for the new recording as computed before (see above).

If the bold bar 34 overlaps one of the bars representing the existing recordings (as on Figure 2 : bold bar 34 overlaps bar 32), recording of the new recording at the instant location would overwrite (and thus erase) all or part of the content of the existing recording represented by bar 32. The proposed representation allows the user to be very easily aware of this overwriting risk.

To even more clearly show the user the overwriting risk, the micro-processor 14 checks if such an overlapping exists and, if so, displays an overwriting window 26 showing metadata (for instance title data) associated with the existing recording on which the new recording (bold bar 34) overlaps. For instance, in Figure 2, bar 32 (which is partly covered by the bold bar 34) represents an existing recording having as title data the text "FRIENDS". "FRIENDS" therefore appears in the overwriting window 26 to clearly indicate to the user that the title (or recording) "FRIENDS" will be overwritten if the new recording effectively takes place at the instant location.

By acting on his remote-control (for instance on the left-arrow and on the right-arrow), the user can move the bold bar 34 on the screen and thus correspondingly change the location at which the new recording shall take place on the medium. As the existing titles (or recordings) are at a fixed position, moving of the bold bar 34 may change the bars which the bold bar 34 overlaps and the overwriting window 26 is updated accordingly.

Figure 3 shows a screen obtained starting from Figure 2 by the user pressing the left-arrow key : the bold bar 34 has moved in small steps towards the left border of the screen until it gets to the position depicted on Figure 3.

The bold bar 34 does not overlap any more bar 32 representing the "FRIENDS" existing recording, which means the new recording will not overwrite the "FRIENDS" recording any more if launched at the position shown on Figure 3. Consequently, the title data "FRIENDS" has been removed from the overwriting window 26.

However, the bold bar 34 now overlaps bar 28 and 30, respectively representing an existing recording having "EVENING NEWS" as title data and an existing recording having "E.R" as title data. The micro-processor 14 therefore instructs to display these respective titles "EVENING NEWS" and "E.R." in the overwriting window 26.

When the new recording location on the medium is convenient to the user, he presses a selection key (for instance "OK" on the remote-control) to end up the programming of the recording. At this time, the recording position (*i.e*, the future location of the new recording on the medium) becomes effective : the recording of the desired channel will be done at the location on the medium last specified by the user, at the indicated time and date.

The above description should be considered as an exemplary embodiment of the invention only. Additions and variations can be made without departing from the scope of the invention.

Notably, the programming can also include the step of reading and storing the disc number. At the time of recording (defined by the timer), the micro-processor 14 checks whether the inserted disc has the stored disc number. If so, the recording takes place at the location defined by the bold bar. If not, the recording may only take place in empty spaces to avoid any unpredicted overwriting of titles.

Similarly, when a disc library is stored in the video recorder, the user can select another disc when the new recording location on the medium is not convenient to the user on the current inserted disc. The selection can be made by choosing a disc number from the disc library stored list. When another disc number is selected, the on-screen information bars (recording titles, space available and the time length of new recording on a pre-selected location) will be updated accordingly. This will allow the user to view the available space on different discs in the disc library. The user will confirm the disc number if the new recording location on the medium is convenient to the user.

As another example of a possible variation, the video recorder can naturally output a CVBS signal representing the video sequence (instead of RGB signals in the above example).

It should be understood that programming of the new recording includes cases where the recording takes place immediately after the recording location is selected, without necessarily programming a timer.

Lastly, it should be understood that the word "display" is sometimes used although the video recorder does not necessarily have a display. "Display" means in this case generating signals (e.g. part of a video signal) which are meant to be displayed, for instance by a display connected to the video recorder.

## Claims

1. Process for programming a new recording on a medium, comprising the steps of:
- displaying a first element (34) representing a location of the new recording on the medium ;
- moving the first element depending on user control, thereby changing the location of the new recording.

2. Process according to claim 1, wherein the medium carries at least an existing recording, comprising the step of:
- displaying a second element (28 ; 30 ; 32) representing where the existing recording is located on the medium.

3. Process according to claim 2, comprising the step of:
- checking for an overlapping between the new recording and the existing recording.

4. Process according to claim 3, comprising the step of:
- displaying metadata (26) associated with the existing recording when the overlapping is detected.

5. Process according to claim 4, wherein the metadata (26) is title data.

6. Process according to any of claims 1 to 5, comprising the step of reading on the medium data identifying the medium.

7. Process according to any of claims 1 to 5, comprising the step of allowing user selection of data identifying the medium.

8. Process according to claim 6 or 7, comprising the step of storing said identifying data.

9. Video recorder comprising
- a medium interface (12) for recording video data on a medium;
- recording location display means (14, 16) for displaying a first element (34) representing a location of a new recording on the medium ;
- a user interface (22) for receiving control signals (UI) ;
wherein the recording location display means (14, 16) are operatively coupled to the user interface (22) for changing the location of the new recording based on the control signals (UI).

10. Process for programming a new recording on a medium, comprising the steps of:
- generating (14, 16) a video signal comprising a first element (34) representing a location of the new recording on the medium;
- receiving a control signal (UI) from a user interface (22);
- generating a modified video signal depending on the control signal (UI), wherein the first element (34) represents a modified location of the new recording on the medium.
